# EUROPEAN PATENT APPLICATION

(11) **EP 4 372 227 A1**
(43) Date of publication of application: **22.05.2024**
(21) Application number: 22207411.4
(22) Date of filing: 15.11.2022
(51) Int. Cl.: F03D 80/60

(54) **AIR DUCT COMPRISING A PRESSURE-RELIEF SECTION**

(71) Applicant: Siemens Gamesa Renewable Energy A/S, 7330 Brande (DK)
(72) Inventor: Quist, Tom, 8600 Silkeborg (DK)
(74) Representative: SGRE-Association

(57) **Abstract**

The present invention relates to an air duct (2) for a wind turbine (1) configured to cool a first component (3) of the wind turbine. The air duct (2) comprises a housing (11) and a pressure-relief section (12) arranged at the housing (11), wherein the pressure-relief section (12) is configured to release pressure in the air duct (2) in the event of an explosion inside the housing (11) or when the pressure inside the housing (11) exceeds a predetermined pressure by allowing gas from the interior of the housing (11) to escape through the pressure-relief section (12).

## Description

The present invention relates to an air duct for a wind turbine. The present invention further relates to a method of relieving the pressure of an explosion in a housing of an air duct of a wind turbine.

Wind turbines are increasingly used for the generation of electrical energy. A wind turbine comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor, thereby driving the generator. Hence, the rotational energy of the blades is transferred to the generator, which then converts the mechanical energy into electricity and transfers the electricity to the electrical grid.

The nacelle of the wind turbine houses electrical components being cooled by a cooling unit. Usually, these components are cooled by using air as the cooling fluid. In the case of a short circuit at the electrical components, a pressure blast and even explosions can be generated, which can be dangerous for workers working inside the nacelle and thereby results in a safety risk.

A problem of using air ducts directly connected to electrical equipment to cool the electrical components is that, in case of a short circuit, the pressure blast and the explosions resulting from the short circuit are not confined in the container of the electrical equipment but can travel through the air ducts and injure workers at the nacelle. Thus, a direct connection of air ducts with electrical equipment is usually avoided.

The current development of the technology of wind turbines tends to an increased size of wind turbines for harvesting more wind energy, with longer blades and higher towers. As more energy is produced, the size and weight of the electrical components have increased in size as well. This increased size of wind turbine components might result in higher pressure blasts and explosions originating from short circuits in the electrical components.

It is thus an object for the invention to provide an air duct for a wind turbine with safety measures so that in case of an explosion, the risk of injures to workers and damage to crucial components of the wind turbine are mitigated.

This is achieved by an air duct for a wind turbine according to claim 1 and by a method of relieving the pressure of an explosion in a housing of an air duct of a wind turbine according to claim 15.

According to the invention, an air duct for a wind turbine configured to cool a first component of the wind turbine comprises a housing and a pressure-relief section arranged at the housing. The pressure-relief section is configured to release pressure in the air duct in the event of an explosion inside the housing or when the pressure inside the housing exceeds a predetermined pressure by allowing gas from the interior of the housing to escape through the pressure-relief section.

The pressure-relief section instantly relieves the pressure inside the housing to prevent the housing breaking up as a result of the explosion and to prevent the pressure blast from travelling further inside the nacelle. After the explosion, the damaged components of the air duct can be replaced, and the pressure-relief section can be closed again or replaced without having to replace other parts of the wind turbine.

The pressure-relief section can be understood as a weak section compared to the rest of the housing, through which the pressure is released when the pressure inside the housing exceeds a predetermined pressure.

The predetermined pressure is a pressure at which the event of an explosion inside the housing can be determined and at the same time a pressure which can be borne by the sections of the housing which are not the pressure-relief section without breaking. Hence, at the predetermined pressure, the pressure-relief section of the housing breaks and the pressure inside the housing is relieved, while the rest of the housing remains substantially intact. The pressure can be measured by sensors and a pressure of for example 4 bar can be chosen as the predetermined pressure.

By means of the invention, an uncontrolled explosion and the resulting blasts and shockwaves are avoided by releasing the pressure immediately after the first blast.

Hence, the present invention increases the safety of the wind turbine by reducing the damages caused by an explosion.

According to a preferred embodiment of the invention, the pressure-relief section is detachable from the housing. This is particularly advantageous, as the pressure-relief section can detach from the housing of the air duct to relieve the pressure.

According to another preferred embodiment of the invention, the first component is electrical equipment arranged inside a nacelle of the wind turbine. The electrical equipment can be the transformer or the converter of the wind turbine.

According to another preferred embodiment of the invention, the pressure-relief section faces the rear end of the nacelle.

Hence, the weak section of the housing is arranged where the pressure release caused by an explosion has a low probability of injuring workers inside the nacelle, as the workers are usually working in the surroundings of the hub and at the front of the nacelle. The explosion will thus be guided towards the rear part of the nacelle, and not towards the front of the nacelle.

According to another preferred embodiment of the invention, the pressure-relief section comprises a panel, such as a wall, a door, a hatch or a plate.

According to another preferred embodiment of the invention, the housing further comprises an overpressure duct, wherein the pressure-relief section is located at an end of the overpressure duct.

The overpressure duct can be a sealed channel placed on the structure of the housing to provide a controlled direction for guiding the expanding gas.

According to another preferred embodiment of the invention, the pressure-relief section comprises a clinch joint formed by a plurality of clinch members such as clinch brackets or clinch plates coupled together by pins. Clinching results in weaker joints than coupling metal parts together by welding or gluing, thus the weak spots of the clinch joint of the pressure-relief section can be used for the pressure release in case of an explosion. The strength and number of pins of the joints can be chosen in order to unclinch at specific pressure conditions.

According to another preferred embodiment of the invention, the air duct further comprises a nonreturn valve. This valve provides a first barrier against a pressure blast.

According to another preferred embodiment of the invention, the air duct further comprises a flap configured to block the passage of fluid through the air duct in the event of an explosion inside the housing or when the pressure inside the housing exceeds a predetermined pressure.

According to another preferred embodiment of the invention, the pressure-relief section comprises a sheet configured to melt in the event of an explosion inside the housing or when the pressure inside the housing exceeds a predetermined pressure, thereby allowing gas from the interior of the housing to escape through the sheet. Depending on the pressure and heat created through an explosion or a pressure blast, the thickness of the sheet can be chosen so that it melts at the desired conditions.

According to another preferred embodiment of the invention, the sheet is made of aluminum. Aluminum is an inexpensive material which melts at high temperatures, such as the ones of an explosion.

According to another preferred embodiment of the invention, at least a part of the pressure-relief section is made of an anti-splintering material, such as copper. This is particularly useful in case of explosions, as explosions splitter the pressure-relief section and results in the splitters being projected in all directions as projectiles. This can seriously injure workers at the wind turbine, as well as damage crucial wind turbine components which cannot be replaced with ease.

Hence, the pressure-relief section provides a safety measure which ensures that, in the case of an explosion, the pressure inside the housing does not build up in such a way that the housing breaks and splitters in all directions.

An explosion will deform the pressure-relief section, thereby resulting in an opening in the housing through which the pressure can be relieved, but will not splitter the pressure-relief section, thereby avoiding projectiles of the pressure-relief section from flying and injuring workers or damaging equipment.

According to another preferred embodiment of the invention, the housing further comprises a pressure-resistant section configured to resist blasts, explosions and/or pressures above the predetermined pressure. The pressure-resistant section can be the section facing towards the hub to prevent that the explosion breaks the pressure-resistant section and projects the broken parts towards the workers area.

According to another preferred embodiment of the invention, the housing is painted with fire-proof paint. This is a measure to reduce the risk of a fire propagating through the nacelle and to other components close to the housing. The fire-proof paint also reduces the heat radiation from the housing to the neighboring wind turbine components, further protecting them.

According to another preferred embodiment of the invention, the housing further comprises a releasable retainer for holding the pressure-relief section attached to the housing, the releasable retainer comprising pressure-sensitive means configured to release the retainer in the event of an explosion inside the housing or when the pressure inside the housing exceeds a predetermined pressure.

In the event of an explosion, which results in a pressure above the predetermined pressure for detaching the pressure-relief section, the pressure-relief section is released and the pressure in the housing is relieved.

The releasable retainer can be made of a sheet of material holding the pressure-relief section, wherein the sheet of material is automatically removed in the event of an explosion by the pressure resulting from the explosion.

The sheet of material holding the pressure-relief section can be placed between the pressure-relief section and the rest of the housing so as to separate both parts of the housing.

The sheet of material holding the pressure-relief section can also be placed on an edge of the pressure-relief section. The sheet of material can be pivotally connected to the edge so that, in the event of an explosion, the movement of the sheet of material will release the pressure-relief section.

The releasable retainer can also be electrically opened in the case an explosion is detected.

According to another preferred embodiment of the invention, the releasable retainer is configured to be held in the housing by gravity. The weight of the pressure-relief section retains the pressure-relief section at the housing.

According to another preferred embodiment of the invention, the releasable retainer is glued to the housing. Through the pressure rise and the heat of the explosion, the glue weakens, and the pressure-relief section is automatically released.

According to another preferred embodiment of the invention, the releasable retainer is a hinge. A hinge allows the rotation of the pressure-relief section in case of a pressure rise and the opening of the pressure-relief section without completely detaching the pressure-relief section, thereby avoiding that the pressure-relief section is projected towards the open air and damages the wind turbine or workers. Hence, the hinge avoids the complete release of the pressure-relief section and injure nearby people or wind turbine components.

The material of the pressure-relief section can be chosen in such a way that it absorbs the energy of the explosion and deforms.

According to another preferred embodiment of the invention, the housing comprises a plurality of pressure-relief sections. The plurality of pressure-relief sections can be distributed strategically to minimize the damage to the wind turbine and to workers in case of an explosion.

Such pressure-relief sections are located away from the working area of workers. If an explosion is detected, the turbine preferably shuts down.

In the case of a plurality of pressure-relief sections, the explosion might only trigger and open one of the pressure-relief sections, because as soon as the pressure is released through one of the pressure-relief sections, the pressure greatly decreases inside the housing.

Yet another aspect of the invention relates to a method of relieving the pressure of an explosion in a housing of an air duct of a wind turbine by conducting the pressure released by the explosion through the pressure-relief section of the housing.

In order to facilitate the understanding of the characteristics of the invention and being an integral part of this specification, some drawing sheets are attached on which figures, with an illustrative but not limiting character, the following is represented:
Figures 1 and 2 show a cross-section of a wind turbine from two different perspectives in a schematic view.
Figure 3 shows an air duct of a wind turbine according to an embodiment of the invention comprising an overpressure duct and two pressure-relief sections.
Figure 4 shows an air duct of a wind turbine according to another embodiment of the invention comprising a pressure-relief section comprising a clinch joint.
Figures 5 and 6 shows an air duct of a wind turbine according to an embodiment of the invention comprising a flap.
Figure 7 shows an air duct of a wind turbine according to another embodiment of the invention comprising a pressure-relief section comprising a sheet.

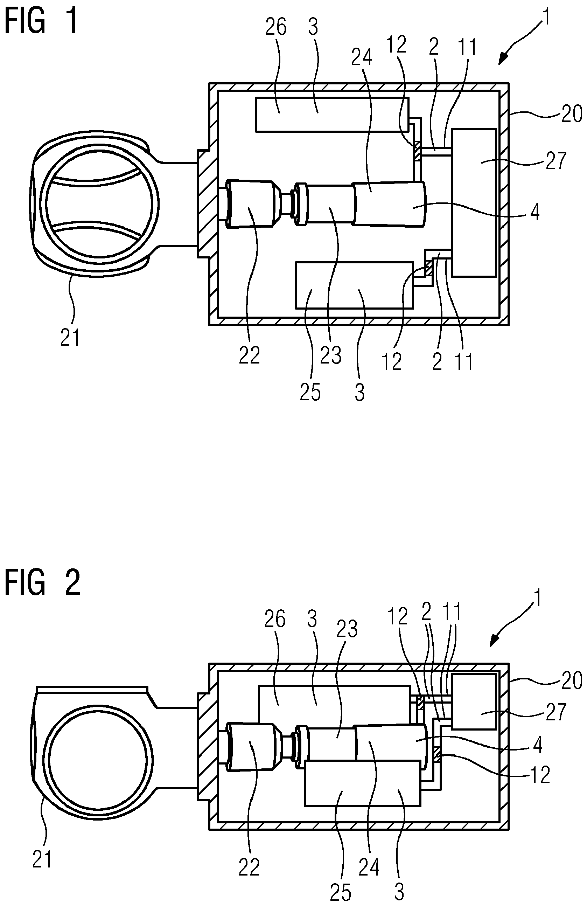

Figures 1 and 2 show a cross-section of a wind turbine 1 from two different perspectives in a schematic view. The wind turbine 1 comprises a hub 21 connected to a generator 24 arranged inside a nacelle 20. The hub 21 comprises three wind turbine blades (not shown). The nacelle 20 is arranged at an upper end of a tower (not shown).

A drive train is arranged inside the nacelle 20. There are two main types of wind turbines 1, the ones with a gearbox 23 and direct drive gearless wind turbines 1. Here, a drive train comprising a gearbox 23 is shown, but drive trains without a gearbox 23 for direct drive gearless wind turbines 1 are also suitable for the invention.

The drive train comprises a main bearing 22, a gearbox 23 and a generator 24 arranged along the longitudinal axis passing through the nacelle 20.

The nacelle 20 further houses a transformer 25 and further electrical equipment 26, both components connected to a cooling unit 27 by means of an air duct 2. The air duct 2 comprises pressure-relief sections 12 configured to release pressure in the air duct 2 in the event of an explosion inside the housing 11 or when the pressure inside the housing 11 exceeds a predetermined pressure by allowing gas from the interior of the housing 11 to escape through the pressure-relief section 12. Depending on where the air duct 2 is connected, the first component 3 is either the transformer 25 or the further electrical equipment 26.

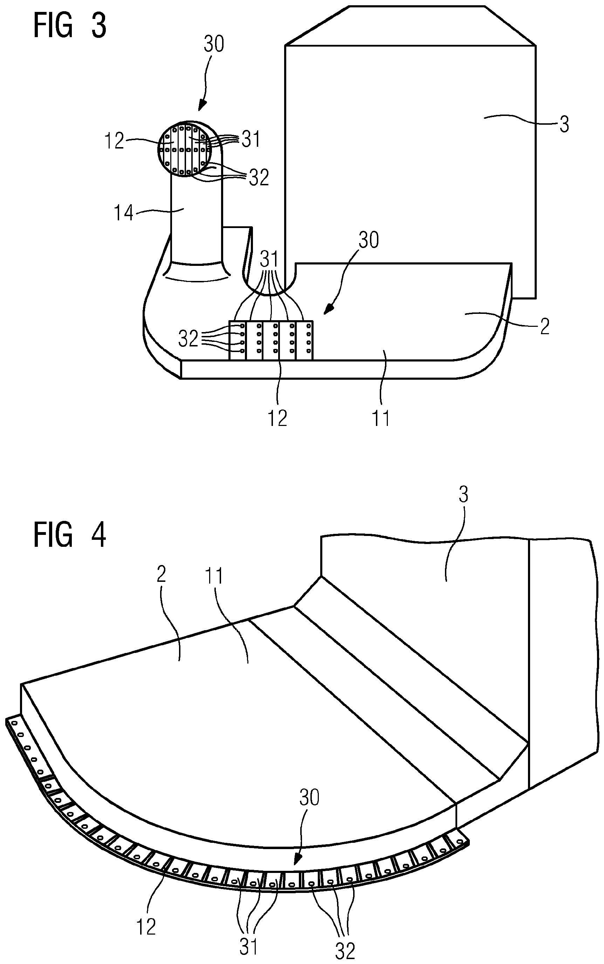

Figure 3 shows an air duct 2 of a wind turbine 1 according to an embodiment of the invention comprising an overpressure duct 14 and two pressure-relief sections 12. The air duct 2 is coupled to a first component 3 to cool the component, but it could also be coupled to further components such as a second component 4 and/or a third component 5. A pressure-relief section 12 is arranged at the housing 11 of the air duct 2 and comprises a clinch joint 30 formed by a plurality of clinch members 31 as clinch plates coupled together by pins 32.

The air duct 2 further comprises an overpressure duct 14 and a further pressure-relief section 12 at the end of the duct comprising a clinch joint 30 formed by a plurality of clinch members 31 as clinch plates coupled together by pins 32.

Figure 4 shows an air duct 2 of a wind turbine 1 according to another embodiment of the invention comprising a pressure-relief section 12 comprising a clinch joint 30. The clinch joints 30 are arranged at the edge of the housing 11 of the air duct 2 along the elbow of the air duct 2.

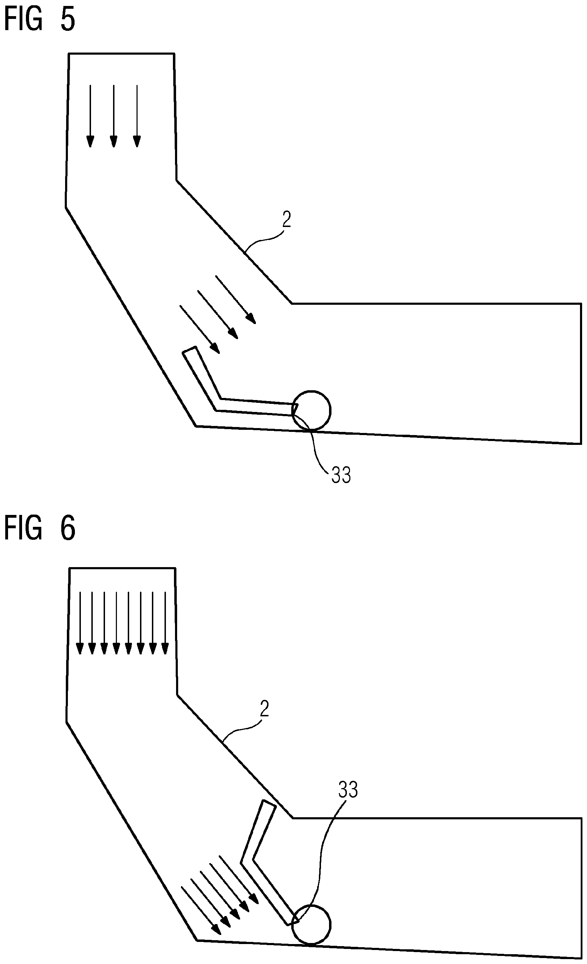

Figures 5 and 6 shows an air duct 2 of a wind turbine 1 according to an embodiment of the invention comprising a flap 33. A flap 33 is a further blocking mechanism of pressure blasts which turns around a pivot when the pressure inside the air duct 2 increases, thereby blocking the passage of the pressure wave further through the air duct 2.

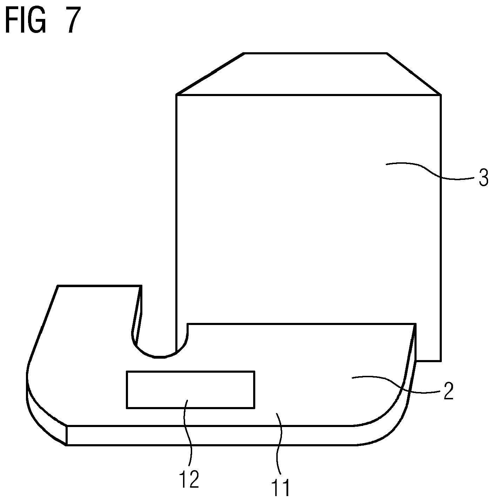

Figure 7 shows an air duct 2 of a wind turbine 1 according to another embodiment of the invention comprising a pressure-relief section 12 comprising a sheet. The sheet is configured to melt in the event of an explosion inside the housing 11 or when the pressure inside the housing 11 exceeds a predetermined pressure, thereby allowing gas from the interior of the housing 11 to escape through the sheet. Depending on the pressure and heat created through an explosion or a pressure blast, the thickness of the sheet can be chosen so that it melts at the desired conditions.

### Reference numbers

- 1: Wind turbine
- 2: Air duct
- 3: First component
- 4: Second component
- 5: Third component

- 11: Housing
- 12: Pressure-relief section
- 14: Overpressure duct

- 20: Nacelle
- 21: Hub
- 22: Main bearing
- 23: Gearbox
- 24: Generator
- 25: Transformer
- 26: Electrical equipment
- 27: Cooling unit

- 30: Clinch joint
- 31: Clinch member
- 32: Pin
- 33: Flap

## Claims

1. An air duct (2) for a wind turbine (1) configured to cool a first component (3) of the wind turbine, said air duct (2) comprising a housing (11) and a pressure-relief section (12) arranged at the housing (11), wherein the pressure-relief section (12) is configured to release pressure in the air duct (2) in the event of an explosion inside the housing (11) or when the pressure inside the housing (11) exceeds a predetermined pressure by allowing gas from the interior of the housing (11) to escape through the pressure-relief section (12) .

2. The air duct (2) according to claim 1, wherein the first component (3) is electrical equipment (26) arranged inside a nacelle (20) of the wind turbine (1).

3. The air duct (2) according to claim 1 or 2, wherein the pressure-relief section (12) comprises a panel, such as a wall, a door, a hatch or a plate.

4. The air duct (2) according to any of the preceding claims, wherein the housing (11) further comprises an overpressure duct (14), wherein the pressure-relief section (12) is located at an end of the overpressure duct (14).

5. The air duct (2) according to any of the preceding claims, wherein the pressure-relief section (12) comprises a clinch joint (30) formed by a plurality of clinch members (31) such as clinch brackets or clinch plates coupled together by pins (32) .

6. The air duct (2) according to any of the preceding claims, wherein the air duct (2) further comprises a flap (33) configured to block the passage of fluid through the air duct (2) in the event of an explosion inside the housing (11) or when the pressure inside the housing (11) exceeds a predetermined pressure.

7. The air duct (2) according to any of the preceding claims, wherein the pressure-relief section (12) comprises a sheet configured to melt in the event of an explosion inside the housing (11) or when the pressure inside the housing (11) exceeds a predetermined pressure, thereby allowing gas from the interior of the housing (11) to escape through the sheet.

8. The air duct (2) according to claim 7, wherein the sheet is made of aluminum.

9. The air duct (2) according to any of the preceding claims, wherein at least a part of the pressure-relief section (12) is made of an anti-splintering material, such as copper.

10. The air duct (2) according to any of the preceding claims, wherein the housing (11) further comprises a pressure-resistant section configured to resist blasts, explosions and/or pressures above the predetermined pressure.

11. The air duct (2) according to any of the preceding claims, wherein the housing (11) is painted with fire-proof paint.

12. The air duct (2) according to claim 1 or 2, wherein the housing (11) further comprises a releasable retainer for holding the pressure-relief section (12) attached to the housing (11), the releasable retainer comprising pressure-sensitive means configured to release the retainer in the event of an explosion inside the housing (11) or when the pressure inside the housing (11) exceeds a predetermined pressure.

13. The air duct (2) according to claim 12, wherein the releasable retainer is a hinge.

14. The air duct (2) according to any of the preceding claims, wherein the housing (11) comprises a plurality of pressure-relief sections (12).

15. Method of relieving the pressure of an explosion in a housing (11) of an air duct (2) of a wind turbine (1) according to any of the claims 1 to 14 by conducting the pressure released by the explosion through the pressure-relief section (12) of the housing (11).
